# EUROPEAN PATENT SPECIFICATION

(11) **EP 3 148 040 B1**
(45) Date of publication and mention of the grant of the patent: **16.08.2023**
(21) Application number: 15893543.7
(22) Date of filing: 01.06.2015
(51) Int. Cl.: H02J 7/00, H02M 3/335

(54) **CHARGING CIRCUIT AND MOBILE TERMINAL**
LADESCHALTUNG UND MOBILES ENDGERÄT
CIRCUIT DE CHARGE ET TERMINAL MOBILE

(43) Date of publication of application: 29.03.2017
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Jialiang, Guangdong Guangdong 523860 (CN)
(74) Representative: Mewburn Ellis LLP
(86) International application number: PCT/CN2015/080499
(87) International publication number: WO 2016/192010

(56) References cited:
- CN-A- 1 977 438
- CN-A- 1 977 438
- CN-A- 104 221 268
- CN-A- 104 221 268

## Description

### TECHNICAL FIELD

The present disclosure relates to mobile terminal field, and particularly to a mobile terminal.

### BACKGROUND

With the growing popularity of mobile terminal use, terminal charging has become a focused issue of mobile terminal providers.

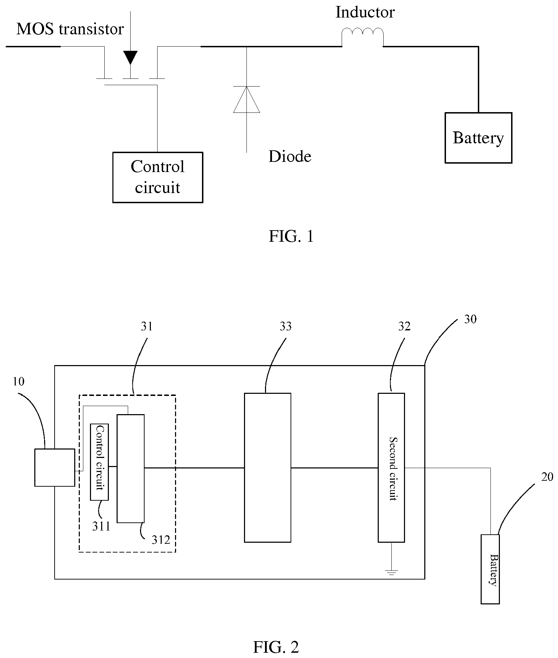

FIG. 1 is a circuit diagram illustrating a charging circuit used in a mobile terminal in the related art. This charging circuit is known as BUCK circuit, which includes a MOS transistor, a control circuit, a diode, an inductor, and a battery. Upon charging, the control circuit controls the MOS transistor to turn-on and turn-off to generate a changing square wave current. The square wave current flows to the inductor from the MOS transistor, and then flows to the battery after voltage stabilization conducted by the inductor.

The above mentioned charging process has a risk of MOS transistor breakdown. Upon MOS transistor breakdown, the current will flow through the inductor, a current/voltage detecting circuit, and the battery directly; this will cause the battery to exceed a limit voltage and may even lead to more serious consequences.

The cause of the damage to the MOS transistor can be as follows.

The MOS transistor is mis-energized; the voltage at both ends of the MOS transistor exceeds a maximum voltage that can be withstood; electrostatic breakdown or surge.

The MOS transistor is of poor quality; or, there is an integrated manufacture technology issue.

There can be other defects.

In order to avoid the above problems and improve the reliability of the MOS transistor, the value of on-resistance (RDSON) of the MOS transistor has been increased so as to improve the voltage resistance of the MOS transistor. On the other hand, high resistance, in turn, would cause the charging circuit to be easy to heat, low energy transmission efficiency and so on.

CN 1977438 A discloses that a DC/AC voltage converter that includes a middle loop capacitor Cz and two transistors T1 and T2 which are combined to a half-bridge. The DC/AC voltage converter provides a rectangular alternating current (AC) voltage on an output terminal between the two transistors T1 and T2, the rectangular AC voltage may be transferred to each unit Z1 to Zn via coupling capacitors CK1 to CKn.

CN 104221268 A discloses a device including a primary circuit connected directly to a source, and a secondary circuit connected to a charging device directly, wherein the primary circuit and the secondary circuit are electrically isolated from each other via at least one pair of isolation capacitors. The primary circuit includes a current transformer used to convert the direct current (DC) voltage to voltage wave. Applying the isolation capacitors transfer the voltage wave to the secondary circuit.

### SUMMARY

The present disclosure provides a mobile terminal, with the aim of improving the reliability of a charging circuit in a mobile terminal.

According to the invention, there is provided a mobile terminal that is set out in the appended set of claims 1-4. In the technical schemes described above, a DC path of the charging circuit is separated by the capacitive coupling element. That is to say, there is no DC path in the charging circuit. DC current from the charging interface would not be output directly to the second circuit and the battery upon failure of the first circuit, whereby reliability of the charging circuit is improved.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.
FIG. 1 is a circuit diagram illustrating a charging circuit in the related art.
FIG. 2 is a block schematic diagram illustrating an example charging circuit.
FIG. 3 is a circuit diagram illustrating an example charging circuit.
FIG. 4 is a circuit diagram illustrating a charging circuit according to an embodiment of the present disclosure.
FIG. 5 is a block schematic diagram illustrating a mobile terminal according to an embodiment of the present disclosure.

### DETAILED DESCRIPTION OF ILLUSTRATED EMBODIMENTS

Technical solutions of the embodiments of the present disclosure will be described clearly and completely taken in conjunction with the accompanying drawings; it will be apparent to one of ordinary skill in the art that, the embodiments described below are merely a part of the disclosure and other embodiments obtained out of them without creative work will fall into the protection range of the present disclosure either.

FIG. 2 is block schematic diagram illustrating an example charging circuit. As shown in FIG.2, a charging circuit 30 is arranged between a charging interface 10 and a battery 20 of a terminal. The charging interface 30 includes a first circuit 31, a capacitive coupling element 33, and a second circuit 32 connected in series successively between the charging interface 10 and the battery 20. The capacitive coupling element 33 disconnects a direct-current (DC) path of the charging circuit 30.

Specifically, the first circuit 31 includes a bridge-arm circuit 312 and a control circuit 311 controlling the bridge-arm circuit. The bridge-arm circuit 312 connects with the charging interface 10, and is configured to charge/discharge capacitors in the capacitive coupling element 33 under control of the control circuit 311 so as to convert DC, which is output from the charging interface 10 and is used for charging, to AC.

The second circuit 32 is configured to adjust alternating current (AC), which is coupled to the second circuit 32 by the first circuit 31 through the capacitive coupling element 33, to DC which is suitable for battery charging.

In this technical scheme, a DC path of the charging circuit is separated by the capacitive coupling element. That is to say, there is no DC path in the charging circuit. DC current from the charging interface would not be output directly to the second circuit and the battery upon failure of the first circuit, whereby reliability of the charging circuit is improved.

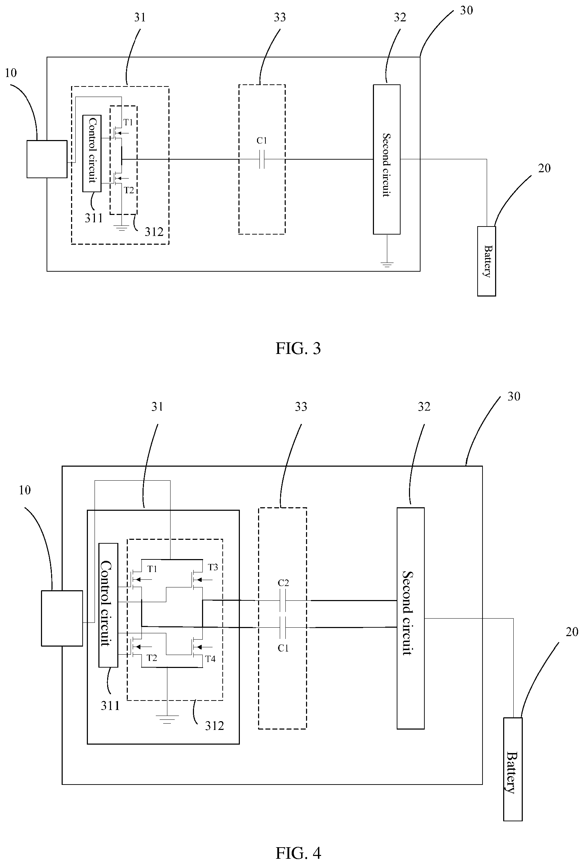

As an example, as shown in FIG.3, the capacitive coupling element 33 includes a capacitor C1, and the bridge-arm circuit is a half-bridge circuit including a first switch transistor T1 and a second switch transistor T2. A first end of the first switch transistor T1 connects with the charging interface 10, a second end of the first switch transistor T2 T1 connects with a first end of the capacitor C1, and a control end of the first switch transistor T1 connects with the control circuit 311. A first end of the second switch transistor T2 connects with the second end of the first switch transistor T1, a second end of the second switch transistor T2 connects to ground, and a control end of the second switch transistor T2 connects to the control circuit 311. A second end of the capacitor C1 connects to ground via the second circuit 32. The battery 20 connects to ground.

In the embodiment of the present disclosure, a switch transistor (such as a MOS transistor), which is easy breakdown, is arranged within the first circuit. When breakdown of the switch transistor occurs, the first circuit could not convert DC to AC via the switch transistor; this cause DC input at the charging interface being applied to a subsequent component of the charging interface or a battery directly. However, with the aid of the capacitive coupling element arranged between the first circuit and the second circuit, a DC path of the charging circuit can be disconnected; therefore, AC is conducted while DC is blocked. That is to say, DC input at the charging interface cannot flow to the second circuit or the battery even if the switch transistor in the first circuit is broke down or failure, whereby the reliability of the charging circuit of the mobile terminal can be improved.

In addition, the capacitive coupling element has good isolation performance. Thus, instead of increasing the on-resistance so as to increase the voltage resistance of the MOS transistor and then improve the reliability of the circuit like in the prior art, in embodiments of the present disclosure, a lower on-resistance of the switch transistor in the first circuit is allowed, and this will improve the energy transfer efficiency of the whole charging circuit while reducing heating and loss.

As an embodiment, the capacitive coupling element 33 includes a first capacitor C1 and a second capacitor C2, and the bridge-arm circuit 312 is a full-bridge circuit including a first switch transistor T1, a second switch transistor T2, a third switch transistor T3, and a fourth switch transistor T4. A first end of the first switch transistor T1 connects with the charging interface 10, a second end of the first switch transistor T1 connects with a first end of the first capacitor C1, and a control end of the first switch transistor T1 connects with the control circuit 311. A first end of the second switch transistor T2 connects with the second end of the first switch transistor T1, a second end of the second switch transistor T2 connects to ground, and a control end of the second switch transistor T2 connects with the control circuit 311. A first end of the third switch transistor T3 connects with the charging interface 10, a second end of the third switch transistor T3 connects with the first end of the second capacitor C2, and a control end of the third switch transistor T3 connects with the control circuit 311. A first end of the fourth switch transistor T4 connects with the second end of the third switch transistor T3, a second end of the fourth switch transistor T4 connects to ground, and a control end of the fourth switch transistor T4 connects with the control circuit 311. A second end of the first capacitor C1 connects with the second circuit 32; a second end of the second capacitor C2 connects with the second circuit 32.

In the embodiment of the present disclosure, a switch transistor (such as a MOS transistor), which is easy breakdown, is arranged within the first circuit. When breakdown of the switch transistor occurs, the first circuit could not convert DC to AC via the switch transistor; this cause DC input at the charging interface being applied to a subsequent component of the charging interface or a battery directly. However, with the aid of the capacitive coupling element arranged between the first circuit and the second circuit, a DC path of the charging circuit can be disconnected; therefore, AC is conducted while DC is blocked. That is to say, DC input at the charging interface cannot flow to the second circuit or the battery even if the switch transistor in the first circuit is broke down or failure, whereby the reliability of the charging circuit of the mobile terminal can be improved.

In addition, the capacitive coupling element has good isolation performance. Thus, instead of increasing the on-resistance so as to increase the voltage resistance of the MOS transistor and then improve the reliability of the circuit like in the prior art, in embodiments of the present disclosure, a lower on-resistance of the switch transistor in the first circuit is allowed, and this will improve the energy transfer efficiency of the whole charging circuit while reducing heating and loss.

The capacitor in the capacitive coupling element 33 is one of the following capacitors: a capacitor composed of printed circuit board (PCB); a capacitor composed of flexible printed circuit (FPC) board.

Specifically, the capacitor composed of PCB is a capacitor composed of PCB sheets and copper foil on the sheets. The capacitor composed of FPC board is a capacitor composed and designed by FPC. The main advantage of the capacitor composed of PCB and the capacitor composed of FPC board lies in that, the capacitor is designed arbitrarily to have any shape, any size, or any thickness, according to the structure and shape of the mobile terminal such as a smart phone.

Wherein, the size, shape, or thickness of the capacitor in the capacitance coupling element is designed based on the structure of the mobile terminal.

Wherein, the bridge-arm circuit includes more than one metal oxide semiconductor field effect transistor (MOSFET).

Wherein, the second circuit includes a rectifier circuit and a filter circuit.

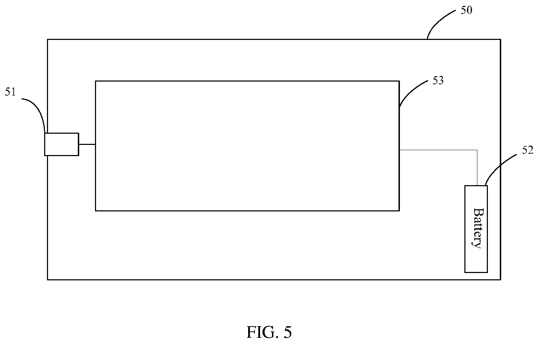

FIG. 5 is a block schematic diagram illustrating a mobile terminal according to an embodiment of the present disclosure. As shown in FIG. 5, a mobile terminal 50 includes a charging interface 51, a battery 52, and a charging circuit 53. The charging circuit 53 adopts any of the implementations of the charging circuit 30 described above.

In the technical scheme described above, a DC path of the charging circuit is separated by the capacitive coupling element. That is to say, there is no DC path in the charging circuit. DC current from the charging interface would not be output directly to the second circuit and the battery upon failure of the first circuit, whereby reliability of the charging circuit is improved.

Wherein, the charging interface 51 is a USB interface.

Wherein, the mobile terminal 50 supports a normal charging mode and a quick charging mode, wherein charging current is larger in the quick charging mode than in the normal charging mode.

It should be understood that the phenomenon of MOS transistor breakdown is particularly serious in the mobile terminal which supports quick charging. As to the problem of circuit unreliability upon quick charging caused by MOS transistor breakdown, the mobile terminal according to the embodiment of the present disclosure can be a good solution.

A person skilled in the art will understand, exemplary units or algorithm steps described in any of the embodiments can be achieved via electronic hardware or a combination of electronic hardware and computer software. Whether hardware or software should be adopted depends on design constraints and specific applications of the technical schemes. Respective specific application can use different methods or manners to achieve the function described in the embodiments, which will fall into the protection scope of the present disclosure.

Specific operations of the device, system, and the unit or module can refer to corresponding description of the method according to the embodiment, and will not go into much detail here.

In the embodiments of the present disclosure, the device, system, and method described herein can be achieved in other manners. The configuration of the device according to the embodiment described above is only exemplary; the division of units in the device is a kind of division according to logical function, therefore there can be other divisions in practice. For example, multiple units or components can be combined or integrated into another system; or, some features can be ignored while some units need not to be executed. On the other hand, various function units can be integrated into one processing unit; two or more than two units can be integrated into one unit; or, each unit is physically separate.

Furthermore, various function units can be integrated into one processing unit; two or more than two units can be integrated into one unit; or, each unit is physically separate.

Operations or functions of technical schemes according to the embodiments of the present disclosure, when achieved in the form of software functional units and sold or used as an independent product, can be stored in a computer readable storage medium. According to this, all or a part of the technical schemes of the present disclosure can be realized in the form of software products which can be stored in a storage medium. The storage medium includes USB disk, Read Only Memory (ROM), Random Access Memory (RAM), magnetic disk, CD, and any other medium that can be configured to store computer-readable program code or instructions. The computer-readable program code, when executed on a data-processing apparatus (can be personal computer, server, or network equipment), adapted to perform all or a part of the methods described in the above-mentioned embodiments.

## Claims

1. A mobile terminal (50), comprising
a charging interface (10);
a battery (20); and
a charging circuit (30) arranged between the charging interface (10) of the mobile terminal (50) and the battery (20) of the mobile terminal (50),
wherein the mobile terminal (50) is configured to support a normal charging mode and a quick charging mode, where charging current is larger in the quick charging mode than in the normal charging mode, wherein the charging circuit (30) comprises:
a first circuit (31),
a capacitive coupling element (33), and
a second circuit (32) connected in series successively between the charging interface (10) and the battery (20), wherein a direct-current, DC, path of the charging circuit (30) is disconnected by the capacitive coupling element (33);
wherein the first circuit (31) comprises a bridge-arm circuit (312) and a control circuit (311) controlling the bridge-arm circuit (312);
wherein the bridge-arm circuit (312) is configured to connect with the charging interface (10) and at least one capacitor in the capacitive coupling element (33), wherein the bridge-arm circuit is configured to combine with the at least one capacitor in the capacitive coupling element (33) to convert DC output from the charging interface (10) to AC, wherein the DC is converted to the AC by charging or discharging or charging and discharging the at least one capacitor in the capacitive coupling element (33) via the bridge-arm circuit (312), under control of the control circuit (311), and wherein, the first circuit (31) and the second circuit (32) are both connected to a ground, the first circuit (31) is connected to a first end of the at least one capacitor, and a second end of the at least one capacitor is connected to the second circuit (32);
wherein the second circuit (32) is configured to adjust AC, which is coupled to the second circuit (32) by the first circuit (31) through the capacitive coupling element (33), to DC which is suitable for charging of the battery (20);
wherein, the first circuit comprises at least one switch transistor, wherein when the switch transistor breaks down, DC output from the charging interface is unable to pass through the capacitor;
wherein the first circuit and the second circuit are both connected with a ground, whereby the first circuit is connected with one end of the capacitor and the ground, the second circuit is connected with another end of the capacitor and the ground,
wherein the capacitive coupling element (33) comprises a first capacitor (C1) and a second capacitor (C2), and the bridge-arm circuit (312) is a full-bridge circuit comprising a first switch transistor (T1), a second switch transistor (T2), a third switch transistor (T3), and a fourth switch transistor (T4),
wherein:
the first switch transistor (T1) has a first end configured to connect with the charging interface (10), a second end connected with a first end of the first capacitor (C1), and a control end connected with the control circuit (311);
the second switch transistor (T2) has a first end connected with the second end of the first switch transistor (T 1), a second end configured to connect to ground, and a control end connected with the control circuit (311);
the third switch transistor (T3) has a first end configured to connect with the charging interface (10), a second end connected with a first end of the second capacitor (C2), and a control end connected with the control circuit (311);
the fourth switch transistor (T4) has a first end connected with the second end of the third switch transistor (T3), a second end configured to connect to ground, and a control end connected with the control circuit (311);
the first capacitor (C1) has a second end connected with the second circuit (32); and
the second capacitor (C2) has a second end connected with the second circuit (32);
wherein the capacitors in the capacitive coupling element (33) comprise one of the following capacitors: a capacitor composed of printed circuit board, PCB; a capacitor composed of flexible printed circuit, FPC, board; and
a size, shape, or thickness of the capacitors in the capacitance coupling element (33) is designed based on the structure of the mobile terminal.

2. The mobile terminal (50) of any of claim 1, wherein the bridge-arm circuit (312) comprises more than one metal oxide semiconductor field effect transistor, MOSFET.

3. The mobile terminal (50) of any of claim 1, wherein the second circuit (32) comprises a rectifier circuit and a filter circuit.

4. The mobile terminal (50) of claim 1, wherein the charging interface (51) is a USB interface.

## Patentansprüche

1. Mobiles Endgerät (50), umfassend:
eine Ladeschnittstelle (10);
eine Batterie (20); und
eine Ladeschaltung (30), die zwischen der Ladeschnittstelle (10) des mobilen Endgeräts (50) und der Batterie (20) des mobilen Endgeräts (50) angeordnet ist,
wobei das mobile Endgerät (50) zum Unterstützen eines Normallademodus und eines Schnelllademodus ausgelegt ist, wobei Ladestrom im Schnelllademodus größer als im Normallademodus ist, wobei die Ladeschaltung (30) umfasst:
eine erste Schaltung (31),
ein kapazitives Koppelelement (33), und
eine zweite Schaltung (32), die zwischen die Ladeschnittstelle (10) und die Batterie (20) sukzessive in Reihe geschaltet ist, wobei ein Gleichstrom-,DC-,Pfad der Ladeschaltung (30) durch das kapazitive Koppelelement (33) getrennt wird;
wobei die erste Schaltung (31) eine Brückenzweigschaltung (312) und eine Steuerschaltung (311) umfasst, die die Brückenzweigschaltung (312) steuert;
wobei die Brückenzweigschaltung (312) zur Verbindung mit der Ladeschnittstelle (10) und mindestens einem Kondensator im kapazitiven Koppelement (33) ausgelegt ist, wobei die Brückenzweigschaltung so ausgelegt ist, dass sie in Kombination mit dem mindestens einen Kondensator im kapazitiven Koppelelement (33) eine DC-Ausgabe aus der Ladeschnittstelle (10) in AC umwandelt, wobei der DC durch Laden oder Entladen oder Laden und Entladen des mindestens einen Kondensators im kapazitiven Koppelelement (33) über die Brückenzweigschaltung (312) unter der Steuerung der Steuerschaltung (311) in AC umgewandelt wird, und wobei die erste Schaltung (31) und die zweite Schaltung (32) beide an Masse gelegt sind, die erste Schaltung (31) mit einem ersten Ende des mindestens einen Kondensators verbunden ist und ein zweites Ende des mindestens einen Kondensators mit der zweiten Schaltung (32) verbunden ist;
wobei die zweite Schaltung (32) so ausgelegt ist, dass sie AC, der durch die erste Schaltung (31) über das kapazitive Koppelelement (33) mit der zweiten Schaltung (32) verbunden ist, an DC anpasst, der zum Laden der Batterie (20) geeignet ist;
wobei die erste Schaltung mindestens einen Schalttransistor umfasst, wobei, wenn der Schalttransistor ausfällt, die DC-Ausgabe aus der Ladeschnittstelle den Kondensator nicht passieren kann;
wobei sowohl die erste Schaltung als auch die zweite Schaltung an Masse gelegt sind, wodurch die erste Schaltung mit einem Ende des Kondensators und der Masse verbunden ist, und die zweite Schaltung mit einem anderen Ende des Kondensators und der Masse verbunden ist,
wobei das kapazitive Koppelelement (33) einen ersten Kondensator (C1) und einen zweiten Kondensator (C2) umfasst, und die Brückenzweigschaltung (312) eine Vollbrückenschaltung ist, die einen ersten Schalttransistor (T1), einen zweiten Schalttransistor (T2), einen dritten Schalttransistor (T3) und einen vierten Schalttransistor (T4) umfasst,
wobei:
der erste Schalttransistor (T1) ein erstes Ende, das zur Verbindung mit der Ladeschnittstelle (10) ausgelegt ist, ein zweites Ende, das mit einem ersten Ende des ersten Kondensators (C1) verbunden ist, und ein Steuerende aufweist, das mit der Steuerschaltung (311) verbunden ist;
der zweite Schalttransistor (T2) ein erstes Ende, das mit dem zweiten Ende des ersten Schalttransistors (T1) verbunden ist, ein zweites Ende, das dazu ausgelegt ist, an Masse gelegt zu werden, und ein Steuerende aufweist, das mit der Steuerschaltung (311) verbunden ist;
der dritte Schalttransistor (T3) ein erstes Ende, das zur Verbindung mit der Ladeschnittstelle (10) ausgelegt ist, ein zweites Ende, das mit einem ersten Ende des zweiten Kondensators (C2) verbunden ist, und ein Steuerende aufweist, das mit der Steuerschaltung (311) verbunden ist;
der vierte Schalttransistor (T4) ein erstes Ende, das mit dem zweiten Ende des dritten Schalttransistors (T3) verbunden ist, ein zweites Ende, das dazu ausgelegt ist, an Masse gelegt zu werden, und ein Steuerende aufweist, das mit der Steuerschaltung (311) verbunden ist;
der erste Kondensator (C1) ein zweites Ende aufweist, das mit der zweiten Schaltung (32) verbunden ist; und
der zweite Kondensator (C2) ein zweites Ende aufweist, das mit der zweiten Schaltung (32) verbunden ist;
wobei die Kondensatoren im kapazitiven Koppelelement (33) einen der folgenden Kondensatoren umfassen: einen Kondensator, der aus einer gedruckten Leiterplatte, PCB, gebildet ist; einen Kondensator, der aus einer flexiblen gedruckten Leiter-,FPC-,Platte gebildet ist; und
eine Größe, eine Form oder eine Dicke der Kondensatoren im kapazitiven Koppelelement (33) basierend auf der Struktur des mobilen Endgeräts bemessen sind.

2. Mobiles Endgerät (50) nach einem des Anspruchs 1, wobei die Brückenzweigschaltung (312) mehr als einen Metalloxid-Halbleiter-Feldeffekttransistor, MOSFET, umfasst.

3. Mobiles Endgerät (50) nach einem des Anspruchs 1, wobei die zweite Schaltung (32) eine Gleichrichterschaltung und eine Filterschaltung umfasst.

4. Mobiles Endgerät (50) nach Anspruch 1, wobei die Ladeschnittstelle (51) eine USB-Schnittstelle ist.

## Revendications

1. Terminal mobile (50), comportant
une interface (10) de charge ;
une batterie (20) ; et
un circuit (30) de charge disposé entre l'interface (10) de charge du terminal mobile (50) et la batterie (20) du terminal mobile (50),
le terminal mobile (50) étant configuré pour gérer un mode de charge normale et un mode de charge rapide, un courant de charge étant plus élevé dans le mode de charge rapide que dans le mode de charge normale, le circuit (30) de charge comportant :
un premier circuit (31),
un élément (33) de couplage capacitif, et
un deuxième circuit (32) branché en série successivement entre l'interface (10) de charge et la batterie (20), un trajet de courant continu, DC, du circuit (30) de charge étant déconnecté par l'élément (33) de couplage capacitif ;
le premier circuit (31) comportant un circuit (312) de branche de pont et un circuit (311) de commande commandant le circuit (312) de branche de pont ;
le circuit (312) de branche de pont étant configuré pour se raccorder avec l'interface (10) de charge et au moins un condensateur dans l'élément (33) de couplage capacitif, le circuit de branche de pont étant configuré pour se combiner avec le ou les condensateurs dans l'élément (33) de couplage capacitif pour convertir une sortie en courant continu provenant de l'interface (10) de charge en courant alternatif, le courant continu étant converti en courant alternatif en chargeant ou en déchargeant, ou en chargeant et déchargeant, le ou les condensateurs dans l'élément (33) de couplage capacitif via le circuit (312) de branche de pont, sous le contrôle du circuit (311) de commande, et le premier circuit (31) et le deuxième circuit (32) étant tous deux reliés à une masse, le premier circuit (31) étant relié à une première extrémité du ou des condensateurs, et une deuxième extrémité du ou des condensateurs étant reliée au deuxième circuit (32) ;
le deuxième circuit (32) étant configuré pour ajuster un courant alternatif, qui est couplé au deuxième circuit (32) par le premier circuit (31) à travers l'élément (33) de couplage capacitif, à un courant continu qui convient pour la charge de la batterie (20) ;
le premier circuit comportant au moins un transistor de commutation, une sortie en courant continu provenant de l'interface de charge ne pouvant pas traverser le condensateur lorsque le transistor de commutation claque ;
le premier circuit et le deuxième circuit étant tous deux reliés à une masse, le premier circuit étant relié à une extrémité du condensateur et à la masse, le deuxième circuit étant relié à une autre extrémité du condensateur et à la masse,
l'élément (33) de couplage capacitif comportant un premier condensateur (C1) et un deuxième condensateur (C2), et le circuit (312) de branche de pont étant un circuit de pont complet comportant un premier transistor (T1) de commutation, un deuxième transistor (T2) de commutation, un troisième transistor (T3) de commutation, et un quatrième transistor (T4) de commutation :
le premier transistor (T1) de commutation possédant une première extrémité configurée pour se raccorder à l'interface (10) de charge, une deuxième extrémité raccordée à une première extrémité du premier condensateur (C1), et une extrémité de commande raccordée au circuit (311) de commande,
le deuxième transistor (T2) de commutation possédant une première extrémité raccordée à la deuxième extrémité du premier transistor (T1) de commutation, une deuxième extrémité configurée pour se raccorder à la masse, et une extrémité de commande raccordée au circuit (311) de commande ;
le troisième transistor (T3) de commutation possédant une première extrémité configurée pour se raccorder à l'interface (10) de charge, une deuxième extrémité raccordée à une première extrémité du deuxième condensateur (C2), et une extrémité de commande raccordée au circuit (311) de commande ;
le quatrième transistor (T4) de commutation possédant une première extrémité raccordée à la deuxième extrémité du troisième transistor (T3) de commutation, une deuxième extrémité configurée pour se raccorder à la masse, et une extrémité de commande raccordée au circuit (311) de commande ;
le premier condensateur (C1) possédant une deuxième extrémité raccordée au deuxième circuit (32) ; et
le deuxième condensateur (C2) possédant une deuxième extrémité raccordée au deuxième circuit (32) ;
les condensateurs dans l'élément (33) de couplage capacitif comportant un des condensateurs suivants : un condensateur composé d'une carte à circuit imprimé, PCB ; un condensateur composé d'une carte à circuit imprimé souple, FPC ; et
une taille, une forme ou une épaisseur des condensateurs dans l'élément (33) de couplage capacitif étant conçue d'après la structure du terminal mobile.

2. Terminal mobile (50) selon l'une quelconque de la revendication 1, le circuit (312) de branche de pont comportant plus d'un transistor à effet de champ métal-oxyde-semiconducteur, MOSFET.

3. Terminal mobile (50) selon l'une quelconque de la revendication 1, le deuxième circuit (32) comportant un circuit redresseur et un circuit de filtre.

4. Terminal mobile (50) selon la revendication 1, l'interface (51) de charge étant une interface USB.
